(19)

Europäisches
Patentamt

European
Patent Office

Office européen
des brevets

(11) **EP 3 868 847 A1**

(12) **EUROPEAN PATENT APPLICATION**

(43) Date of publication:
**25.08.2021 Bulletin 2021/34**

(21) Application number: **20382126.9**

(22) Date of filing: **21.02.2020**

(51) Int Cl.:
*C09K 3/22* *(2006.01)*          *A01G 15/00* *(2006.01)*
*E01H 13/00* *(2006.01)*

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Constructora San José, S.A.
36001 Pontevedra (ES)**

(72) Inventor: **ANTÓN GALLO, Miguel A.
36001 Pontevedra (ES)**

(74) Representative: **Pons
Glorieta Ruben Dario 4
28010 Madrid (ES)**

---

(54) **USE OF NON-IONIC SURFACTANT AS AN ENHANCER OF EVAPORATION AND/OR
CONDENSATION ACTIVITY IN WATER DIFFUSION IN MIST AND CONTAMINATION REMOVAL
PROCESSES**

(57)    The present invention relates to the use of a solution which enhances the condensation and/or evaporation of fog or other particles suspended in the air to thereby reduce or disperse same and to thereby increase the visibility in said local area. Accordingly, the present invention is comprised in the technical field of safety systems for protection against fog.

**EP 3 868 847 A1**

## Description

The present invention relates to the use of a solution which enhances the condensation and/or evaporation of fog or other particles suspended in the air to thereby reduce or disperse same and to thereby increase the visibility in said local area. Accordingly, the present invention is comprised in the technical field of safety systems for protection against fog.

## STATE OF THE ART

The World Meteorological Organization defines atmospheric fog as a suspension of small, generally microscopic water droplets in the air which may reduce horizontal visibility at the Earth's surface to less than 1000 m.

There are different ways to classify fog, such as according to its mechanism of formation, for example. Taking this criterion into account, fog can be classified into: radiation fog, advection fog, evaporation fog, and mixing or front and upslope fog.

Another possible classification is according to temperature. According to this criterion, fog is classified into three types: super cold fog, cold fog, and hot fog.

In a first approach, fog visibility (V) is regulated by the following expression: V = F (K, r/LW), where K is a constant, r is the mean radius of the water droplets, and LW is the air moisture.

Many authors have linked visibility with droplet concentration (Nd) and the amount of moisture of the water droplets in the air (LWC):

$$V = k1/(LWCxNd)^{k2},$$

where k1 and k2 are constants.

Based on the foregoing, to enable the improvement of visibility in foggy areas, there is a need to reduce the number of droplets or the amount of water in fog droplets, or to modify both factors at the same time.
Fog visibility depends on the total number of droplets and on the size thereof. Furthermore, in accordance with Koschmieder's theory and considering a contrast of 5%, visibility will be:

$$\mathrm{Vis} = -\frac{\ln 0.05}{\beta} \approx \frac{3.0}{\beta}$$

with β being the extinction coefficient.

Moreover, the extinction coefficient is related to the number of droplets and their size in the following manner:

$$\beta = \int_{D_{min}}^{\infty} \frac{\pi}{4} Q_{ext}(D)\, n(D) D^2 dD$$

where $Q_{ext}$ is the extinction efficiency which is normally considered to be 2 in value.

Therefore, if the distribution of the number of droplets for each size is known, visibility can be calculated. These distributions for each of the tests have been measured in laboratory by means of a Welas 2000 spectrometer.

According to the data shown by Jiusto [Jiusto, J.E., R.J. Pilie, and W.C. Kocmond, 1968: Fog Modification with Giant Hygroscopic Nuclei. J. Appl. Meteor., 7, 860-869], visibility in foggy conditions is improved by means of seeding particles of a NaCl solution in the area where fog is present, whereby at least 11 minutes are required to achieve a visibility of 300 meters with said solution acting continuously in the environment.

Accordingly, there is a need to provide a quicker and more efficient method for reducing the state of the fog and other particles suspended in the air which may hinder visibility both in terms of road traffic and open air working spaces.

## DESCRIPTION OF THE INVENTION

The present invention is based on the use of an aqueous solution of a non-ionic surface active agent in systems for reducing fog or different particles suspended in the environment.

In a first aspect, the present invention relates to the use of a condensation and/or evaporation enhancing solution, characterized in that it comprises

- an aqueous solution of between 0.01% and 5% by weight of a non-ionic surface active agent;

for projection or spraying by means of fixed or mobile injectors/diffusers/sprayers on local areas affected by fog for the dissipation thereof or on local areas affected by environmental dust, such as quarries, construction area, bulk handling area for the dissipation thereof, or on local areas affected by environmental pollution for the dissipation thereof.

Surfactants are agents capable of reducing the energy of the bonds between water molecules, i.e., reducing the surface tension of water. Said surfactants can be divided into three groups, namely ionic, amphoteric, and non-ionic, according to the electric charge of their molecule.

In the present invention, "non-ionic surfactants" are understood to be those that have no charges when they are present in an aqueous solution. Said surfactants are widely used in agriculture and gardening because, besides having a low toxicity and phytotoxicity, they do not chemically interact with other suspended components and/or elements, allowing the surface tension of water to be drastically reduced with a very low concentration of surfactant. In the present invention, the non-ionic surfactants are C8-C14 alkyl glucosides and any combination thereof.

In the present invention, "projection or spraying" is understood to be the diffusion or sprinkling of the solution of the present invention into the air or the environment of a specific area. The projection or spraying installation comprises at least one support structure and spraying equipment. The spraying equipment comprises a water supply, a hygroscopic substance storage tank, and a dispenser regulating the amount of said substance which is mixed with water to create the aqueous solution that is sprinkled. The spraying equipment also comprises at least one pressure pump to drive the aqueous solution through conduction tubes that are connected to a plurality of diffusers. The projection or spraying installation also comprises a control unit which allows, upon detecting the presence of fog or particles suspended in the air in the area in which the structure is installed, and thereby activating the spraying equipment. The installation may comprise a visibility and weather sensor which is connected to the control unit and which, upon detecting the presence of fog, sends a signal to said control unit which automatically connects the spraying equipment. The installation may comprise a temperature sensor both outside and inside the solution reservoir which is furthermore connected to the central control of the system.

The reduction of fog or particles in the environment occurs because the condensation and/or evaporation of the fog or said suspended particles is enhanced when spraying a solution comprising a non-ionic surfactant. This enhancement results from the fact that once the fog or particles reach the required activation level, a solution of surfactant in water, with droplets having a size regulated by pressure and with suitable dosages, is injected through the diffusers. The generated droplets come into contact with the droplets forming the fog or the suspended particles. A double phenomenon of condensation/evaporation and coalescence occurs. On one hand, the water vapor condenses on the droplets of the solution of non-ionic surfactant and leaves the droplets forming the fog or the particles when the vapor pressure decreases, such that the fog droplets evaporate and the suspended particles cluster together. On the other hand, as they fall the distributed droplets collide and bind together the particle or fog droplets they encounter while moving from the nebulizers to the ground. The fog or particles are thereby eliminated and visibility problems will be eliminated accordingly.

In a preferred embodiment of the enhancing solution, the non-ionic surfactant is biodegradable. In a more preferred embodiment, the biodegradable non-ionic surfactant is selected from C8 alkyl glucoside, C9 alkyl glucoside, C10 alkyl glucoside, C11 alkyl glucoside, C12 alkyl glucoside, C13 alkyl glucoside, C14 alkyl glucoside, and any combination thereof. In an even more preferred embodiment, the non-ionic surfactant is C8 alkyl glucoside. The use of biodegradable non-ionic surfactants has the advantage of being able to be used anywhere as it does not cause any alteration or contamination in the places where the solution of the present invention is used and where the use or dumping of contaminant materials is prohibited, such as on a mountain road, for example.

In another preferred embodiment of the enhancing solution, the temperature of the solution is between 0°C and 30°C. In a more preferred embodiment, the temperature of the solution is between 0°C and 15°C.

In a more preferred embodiment, if the temperature of the solution is between 8°C and 20°C, the temperature of the fog is between 8°C and 20°C, with the temperature of said solution never being higher than the temperature of said fog. In an even more preferred embodiment, if the temperature of the solution is between 3°C and 15°C, the temperature of the fog is between 8°C and 20°C, wherein the temperature of the solution is always at least 5°C less than the temperature of said fog.

When projecting or spraying the solution on the fog, a difference in vapor pressure is created between the droplets of the fog and the droplets of the solution of the present invention. The vapor pressure of a liquid depends on temperature, i.e., the lower the temperature the lower the pressure, such that the non-ionic surfactant lowers the surface tension, thereby facilitating the water vapor molecules of the fog entering the sprayed droplets. If the temperature of the solution is furthermore lower than the temperature of the fog, it therefore has a lower vapor pressure, said process is accelerated.

In another preferred embodiment of the enhancing solution, the water of the solution is room temperature reverse osmosis purified water. Reverse osmosis purified water has the advantage of being free of impurities which interfere in the process of eliminating fog or particles suspended in the air of the local area.

Throughout the description and in the claims, the word "comprises" and its variants are not intended to exclude other technical features, additives, components or steps. For those skilled in the art, other objects, advantages and features of the invention may be deduced from both the description and the practical use of the invention. The following examples are provided by way of illustration and are not intended to be limiting of the present invention.

**EXAMPLES**

The invention will be illustrated below by means of tests performed by the inventors which clearly show the effectiveness of the product of the invention.

**Example 1**

Tests were performed in a methacrylate chamber measuring 1.00 x 1.00 x 1.50 meters, generating fog and measuring the distribution of the number of droplets and their sizes with a spectrometer, calculating visibility. A 2% by weight solution of the commercial product "ISOOP REHUMECTANTE" at room temperature was applied (wherein said ISOOP REHUMECTANTE is a 65% solution of the C8 alkyl glucoside surfactant, Number-CE 414-420-0, in water). Visibility distances at different times were calculated, obtaining surprising results.

Table 1. Relationship between visibility in meters in temperature conditions of 18°C and the application time of the enhancing solution of the present invention.

| Time (seconds) | Visibility (meters) |
|---|---|
| 0 | 50.3 |
| 80 | 130.7 |
| 160 | 210.4 |
| 240 | 290.5 |
| 320 | 370.2 |

**Example 2**

Tests were performed in a methacrylate chamber measuring 1.00 x 1.00 x 1.50 meters, generating fog and measuring the distribution of the number of droplets and their sizes with a spectrometer, calculating visibility. A 2% by weight solution of the commercial product "ISOOP REHUMECTANTE" at a temperature of 5°C below room temperature was applied (wherein said ISOOP REHUMECTANTE is a 65% solution of the C8 alkyl glucoside surfactant, Number-CE 414-420-0, in water). Visibility distances at different times were calculated, obtaining equally surprising results.

Table 2. Relationship between visibility in meters in temperature conditions of 5°C less (13°C) than the recorded fog temperature (18°C) and the application time of the enhancig solution of the present invention.

| Time (seconds) | Visibility (meters) |
|---|---|
| 0 | 25.3 |
| 80 | 219.2 |
| 160 | 372.7 |
| 240 | 523.3 |
| 320 | 799.2 |

**Claims**

1. A use of a condensation and/or evaporation enhancing solution, **characterized in that** it comprises

   • an aqueous solution of between 0.01% and 5% of a non-ionic surfactant;

   for projection or spraying by means of fixed or mobile injectors/diffusers/sprayers on local areas affected by fog for the dissipation thereof or on local areas affected by environmental dust, or on local areas affected by environmental pollution for the dissipation thereof.

2. The use of the enhancing solution according to claim 1, wherein the non-ionic surfactant is biodegradable.

3. The use of the enhancing solution according to claim 2, wherein the biodegradable non-ionic surfactant is selected from C8 alkyl glucoside, C9 alkyl glucoside, C10 alkyl glucoside, C11 alkyl glucoside, C12 alkyl glucoside, C13 alkyl glucoside, C14 alkyl glucoside, and any combination thereof.

4. The use of the enhancing solution according to claim 3, wherein the non-ionic surfactant is C8 alkyl glucoside.

5. The use of the enhancing solution according to any of claims 1 to 4, wherein the temperature of the solution is between 0°C and 30°C.

6. The use of the enhancing solution according to claim 5, the temperature of the solution is between 5°C and 15°C.

7. The use of the enhancing solution according to claim 5, wherein if the temperature of the solution is between 8°C and 20°C, the temperature of the fog is between 8°C and 20°C, with the temperature of said solution never being higher than the temperature of said fog.

8. The use of the enhancing solution according to claim 6, wherein if the temperature of the solution is between 3°C and 15°C, the temperature of the fog is between 8°C and 20°C, wherein the temperature of the solution is always at least 5°C less than the temperature of said fog.

9. The use of the enhancing solution according to any of claims 1 to 8, wherein the water of the solution is room temperature reverse osmosis purified water.

Europäisches
Patentamt

European
Patent Office

Office européen
des brevets

# EUROPEAN SEARCH REPORT

**Application Number**

EP 20 38 2126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 730 432 A (BENNETT C) 1 May 1973 (1973-05-01) | 1,2,5-9 | INV. C09K3/22 A01G15/00 E01H13/00 |
| A | * claim 1 * * column 1, line 4 - line 7 * * column 3, line 57 - column 4, line 26 * * column 4, line 34 - line 47 * ----- | 3,4 | |
| X | CN 105 884 973 B (UNIV SHANDONG SCIENCE & TECH) 14 August 2018 (2018-08-14) | 1,2,5-9 | |
| A | * abstract * * paragraphs [0021], [0028], [0029] * ----- | 3,4 | |

**TECHNICAL FIELDS SEARCHED (IPC)**

C09K
A01G
E01H

The present search report has been drawn up for all claims

| Place of search | Date of completion of the search | Examiner |
|---|---|---|
| The Hague | 4 September 2020 | Domínguez Gutiérrez |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 868 847 A1

**ANNEX TO THE EUROPEAN SEARCH REPORT
ON EUROPEAN PATENT APPLICATION NO.**

EP 20 38 2126

This annex lists the patent family members relating to the patent documents cited in  the above-mentioned European search report.
The members are as contained in the European Patent Office EDP file on
The European Patent Office is in no way liable for these particulars which are merely given for the purpose of information.

04-09-2020

| Patent document cited in search report | | Publication date | Patent family member(s) | Publication date |
|---|---|---|---|---|
| US 3730432 | A | 01-05-1973 | NONE | |
| CN 105884973 | B | 14-08-2018 | NONE | |

EPO FORM P0459

For more details about this annex : see Official Journal of the European Patent Office, No. 12/82

6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIUSTO, J.E. ; R.J. PILIE ; W.C. KOCMOND.** *Fog Modification with Giant Hygroscopic Nuclei. J. Appl. Meteor,* 1968, vol. 7, 860-869